# EUROPÄISCHE PATENTSCHRIFT

(11) **EP 0 500 539 B1**
(45) Veröffentlichungstag und Bekanntmachung des Hinweises auf die Patenterteilung: **04.05.1994**
(21) Anmeldenummer: 90913126.0
(22) Anmeldetag: 13.09.1990
(51) Int. Cl.: F02N 15/00, F02N 11/00, H02K 5/10

(54) **UMHÜLLUNG FÜR ELEKTRISCHE MASCHINEN**
PROTECTIVE CLADDING FOR ELECTRICAL MACHINERY
ENVELOPPE POUR MACHINES ELECTRIQUES

(30) Priorität: 24.10.1989 DE 3935299
(43) Veröffentlichungstag der Anmeldung: 02.09.1992
(73) Patentinhaber: ROBERT BOSCH GMBH, 70442 Stuttgart (DE)
(72) Erfinder: FRANZ, Peter, D-3201 Diekholzen (DE)
(86) Internationale Anmeldenummer: DE9000700
(87) Internationale Veröffentlichungsnummer: WO9106759

(56) Entgegenhaltungen:
- FR-A- 1 348 886
- FR-A- 2 436 263
- FR-A- 2 496 353
- GB-A- 2 111 763
- Patent Abstracts of Japan, vol. 7, no. 128 (M-220) (1273) 03 June 1983, & JP-A-58 47155 (SHINSUKE KOMATSU) 18 March 1983

## Beschreibung

### Stand der Technik

Elektrische Maschinen, insbesondere Andrehvorrichtungen von Brennkraftmaschinen, die bei dem rauhen Betrieb in Kraftfahrzeugen Schmutz und Feuchtigkeit ausgesetzt sind, werden in bekannter Weise durch Tauchlackieren abgedichtet und gegen Korrosion geschützt. Dabei ist von Nachteil, daß das Lackieren meist im Tauchverfahren mit Lacken erfolgt, die für sich und beim Verarbeiten aufwendige Umweltschutzmaßnahmen wegen Explosionsgefahr und gegen schädliche Emissionen erfordern. Darüber hinaus ist von Nachteil, daß die Motorgehäuse, Antriebslager und Kommutatorlager bei Andrehvorrichtungen zusammenhaltenden Spannbolzen oder Zuganker eine gewisse Elastizität besitzen. Sie ist beispielsweise erforderlich, um den Schütteleinflüssen bei Betrieb des Kraftfahrzeuges entgegenzuwirken. Die Lacke verspröden jedoch nach einer gewissen Zeit und brechen dann immer wieder aus den Trennfugen an den Stirnseiten des Motorgehäuses aus. Die Abdichtung des Motorinneren ist nicht mehr gegeben, Schmutz und Feuchtigkeit können eindringen und führen zu Schäden im Motor. Außerdem treten an den lackfreien Fugenabschnitten durch Korrosion Schäden auf.

Das gleiche gilt auch allgemein für elektrische Maschinen mit gleichem oder ähnlichem Aufbau mit entsprechenden Abdichtungen, die beispielsweise in Kraftfahrzeugen als Generatoren, als Kleinmotoren für andere Aggregate wie Scheibenwischer oder beispielsweise auch als Antriebsmotor in Elektrowerkzeugen verwendet werden.

Es ist bereits ein Elektromotor für eine Andrehvorrichtung bekannt, auf dessen Motorgehäuse eine Gummihülse geschoben ist, welche lediglich die Trennfugen zu den Stirnseiten des Motorgehäuses, an denen das Antriebs- beziehungsweise das Kommutatorlager angeordnet ist, wasserabdichtend bedecken. Dabei ist von Nachteil, daß die Gummihülse ein kompliziertes und teueres Formteil ist. Darüber hinaus ist die Gummihülse an einem Ende mit einer radial nach innen ragenden Aufnahme und einem Loch versehen, durch das ein litzenförmiges Stromzuführkabel geschoben ist. Außerdem weist die Gummihülse über ihre ganze Länge verteilte ringförmige Innenschultern auf, um als Stoßsicherung für das Motorgehäuse und die an seiner Innenwand angeklebten Permanentmagnete zu dienen.

Eine Verpackung mit einer aufgeschrumpften Folien - Hülle, die den verpackten Gegenstand allseitig dauerhaft umhüllt , ist bekannt aus der EP-A- 184 524 und sie ist als Verpackung auch als geeignet für "mechanische Teile" beschrieben.

### Aufgabe, Lösung und Vorteile der Erfindung

Der Erfindung liegt die Aufgabe zugrunde, die Feuchtigkeitsdichtheit und Korrosionsfestigkeit von elektrischen Maschinen zu verbessern mit Hilfe einfacher und umweltfreundlicherer Mittel, die sich für eine wirtschaftliche Großmengenfertigung eignen.

Zur Lösung der Aufgabe sind die im Kennzeichen des Hauptanspruchs angegebenen Maßnahmen vorgesehen.

Dabei ist von Vorteil, daß aufgeschrumpfte Folien einen verbesserten Korrosionsschutz und eine dauerhafte Dichtheit der elektrischen Maschine ermöglichen. Darüber hinaus werden Kosten und Anlagenaufwand für die als Folie ausgebildete abdichtende Umhüllung wesentlich verringert. Dabei ist vor allem gegenüber Lacken von Vorteil, daß die umweltbelastenden Faktoren mit Folgekosten nahezu vermieden werden können. Restliche umweltbelastende Stoffe können gesammelt und Recyclingprozessen zugeführt werden.

Durch die in den Unteransprüchen aufgeführten Maßnahmen sind vorteilhafte Weiterbildungen der im Hauptanspruch angegebenen Umhüllung möglich. Besonders vorteilhaft läßt sich ein preiswerter Abschnitt oder ein taschenförmiges Teil eines Schrumpfschlauchs auf die elektrische Maschine schieben oder ziehen und dann aufschrumpfen. Auch kann die als Umhüllung dienende Folie der Außenform der elektrischen Maschine entsprechend mit Vorprägungen versehen werden. Nach dem Umhüllen werden die Folienränder aneinander befestigt, bevor die Folie geschrumpft wird. Besonders vorteilhaft für Andrehvorrichtungen für Brennkraftmaschinen mit am Andrehmotorgehäuse seitlich angebautem elektromagnetischem Schalter und Stromzuführungskabel zwischen Andrehmotor und Schalter eignen sich vorgeprägte Hälften, die um die vollständige Andrehvorrichtung gelegt werden können, an ihren Rändern miteinander befestigt und dann geschrumpft werden, so daß für das Stromzuführungskabel keine besondere Abdichtung beim Herausführen aus dem Andrehmotorgehäuse benötigt wird. Durch das Festkleben der geschrumpften Folie auf den umhüllten Teilen ist die elektrische Maschine auch bei Beschädigen der Umhüllung weiterhin geschützt` weil die Folie nicht abblättert und sich nicht abziehen läßt. Außerdem genügt die Elastizität der Umhüllung den Anforderungen an die Schüttelsicherheit bei dem rauhen Betrieb in Kraftfahrzeugen, dem die Andrehvorrichtungen ausgesetzt sind.

### Zeichnung

Ausführungsbeispiele der Erfindung sind in der Zeichnung dargestellt und in der nachfolgenden Beschreibung näher erläutert. Es zeigen Figur 1 eine Andrehvorrichtung mit seitlich am Andrehmotor angebautem elektromagnetischem Schalter und einem ersten Ausführungsbeispiel der Folie als Tasche, Figur 2 ein zweites Ausführungsbeispiel der Folie als hülsenförmiger Abschnitt eines Schrumpfschlauchs, Figur 3 ein drittes Ausführungsbeispiel der aus zwei taschenförmigen Teilen gebildeten Folie, Figur 4 die Andrehvorrichtung und ein viertes Ausführungsbeispiel der aus zwei Formteilen gebildeten Folie. Die Andrehvorrichtung und alle Ausführungsbeispiele der Folie sind in räumlicher Darstellung vor dem Aufbringen der Folie auf die Andrehvorrichtung dargestellt.

### Beschreibung der Ausführungsbeispiele

Als Ausführungsbeispiel der Erfindung sind abdichtende Umhüllungen für Andrehvorrichtungen beschrieben, weil sie beispielhaft für besonders komplizierte Außenformen sind.

Eine Andrehvorrichtung hat einen Andrehmotor 1 mit einem Polgehäuse 2. An den Stirnseiten des Polgehäuses sind ein Antriebslager 3 und ein Kommutatorlager 4 befestigt. Ein elektromagnetischer Schalter 5 ist seitlich am Polgehäuse 2 angeordnet und am Antriebslager 3 befestigt. Ein Stromzuführkabel 6 ist vom Schalter 5 zum Andrehmotor 1 geführt. Eine zum Schrumpfen geeignete taschenförmige Folie 7 mit annähernd eiförmigem Umfang und Boden 8 wird in Richtung des Pfeils 9 von der Kommutatorlagerseite her auf die Andrehvorrichtung geschoben oder gezogen, so daß sie die Andrehvorrichtung bis auf den maulartigen Vorsprung 10 des Antriebslagers 3, welcher das Andrehritzel 11 umgreift, umhüllt. Danach wird die taschenförmige Folie 7 auf die Andrehvorrichtung geschrumpft. Die taschenförmige Folie deckt dann sicher die Trennfugen 12 und 13 an den Stirnseiten des Polgehäuses 2 zum Antriebslager 3 und zum Kommutatorlager 4 ab ebenso die Trennfuge 14 zwischen dem Antriebslager 3 und dem elektromagnetischen Schalter 5. Durch den Boden 8 der taschenförmigen Folie 7 sind auch das bereits am Andrehmotor 1 und am elektromagnetischen Schalter 5 montierte Stromzuführkabel 6, seine Anschlußstelle am Schalter 5 und vor allem seine Herausführungsöffnung aus dem Polgehäuse 2 sicher geschützt.

Ist die Folie klebfähig, so sitzt sie nach dem Schrumpfen fest auf der umhüllten Andrehvorrichtung, ohne von beispielsweise beim Transport beschädigten Stellen aus abzublättern oder abziehbar zu sein.

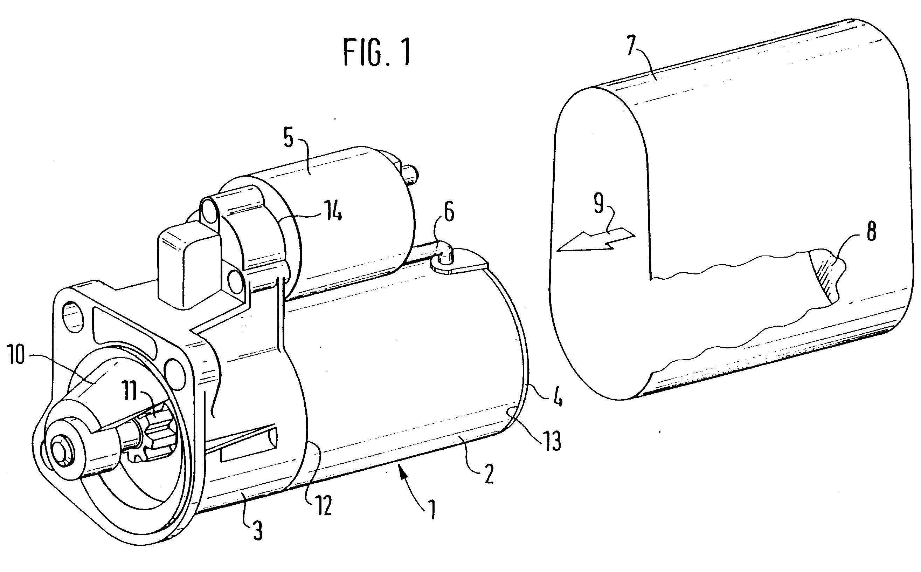

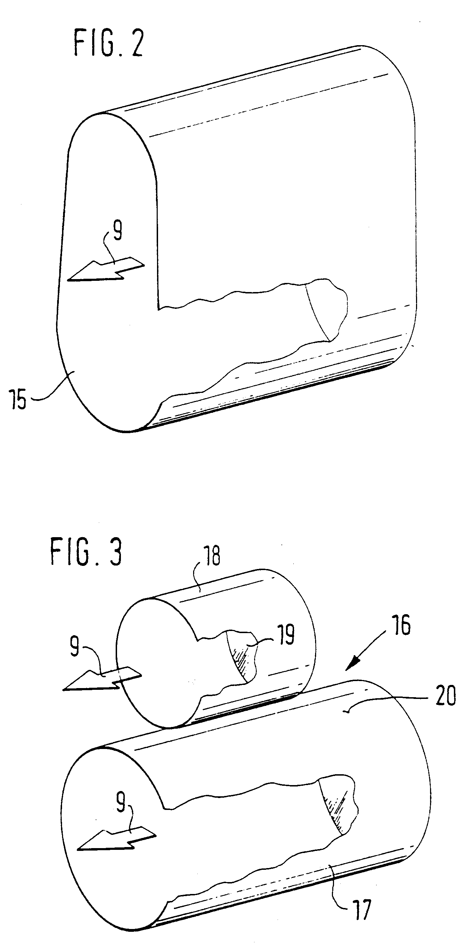

Bei dem in Figur 2 dargestellten zweiten Ausführungsbeispiel ist die Folie als hülsenförmiger Abschnitt 15 eines an sich formlosen Schrumpfschlauchs ausgebildet und wiederum in Pfeilrichtung 9 auf die Andrehvorrichtung wie bei dem Ausführungsbeispiel nach Figur 1 vom Kommutatorlager 4 her schiebbar oder ziehbar, bis sie den Andrehmotor 1 samt Antriebs- und Kommutatorlager 3 und 4 sowie den elektromagnetischen Schalter 5 umhüllt, um danach durch Schrumpfen die Andrehvorrichtung sicher schützend zu umschließen.

Als drittes Ausführungsbeispiel für die Folie 16 sind zwei taschenförmige Folien 17 und 18 kreisrunden Querschnitts mit dem Durchmesser des Polgehäuses 2, beziehungsweise mit dem Durchmesser des Schalters 5 angepaßtem Durchmesser und mit entsprechend Andrehmotor 1 und Schalter 5 versehener Länge ausgebildet und zu einer vorgefertigten etwa achtförmigen Einheit verbunden. Die taschenförmige Folie 18 ist vom offenen Rand der taschenförmigen Folie 17 so weit zurückgesetzt auf dem Außenmantel 20 der Folie 17 befestigt, daß in vollständig auf die Andrehvorrichtung gezogenem Zustand die Folie 18 den Schalter 5 und die Folie 17 den Andrehmotor 1 umhüllen. Die achtförmige Folie 16, 17, 18 ist dann wiederum auf die Andrehvorrichtung geschrumpft. Dabei kann die Folie 16 bis 18 ebenfalls auf der Andrehvorrichtung festgeklebt sein.

Das zwischen Andrehmotor 1 und elektromagnetischem Schalter 5 geführte Stromzuführkabel 6 (Figur 1) kann beispielsweise erst nach dem Aufziehen oder -schrumpfen der achtförmigen Folie 16 bis 18 an den Schalter 5 angeschlossen werden. Auch kann in nicht näher dargestellter Weise bei bereits vor dem Aufziehen oder -schrumpfen der Folie 16 bis 18 im Boden 19 der taschenförmigen Folie 17 eine Öffnung oder ein Schlitz ausgebildet sein, durch welche beziehungsweise welchen das zum Schalter 5 geführte Ende des Stromzuführkabels 6 ragt, das mit seinem anderen Ende bereits am Andrehmotor 1 angeschlossen ist.

Die taschenförmigen Folien 17 und 18 können auch getrennt sein und einzeln aufgezogen oder -geschoben werden und zwar nacheinander oder gleichzeitig.

Die achtförmige Folie 16 kann in abgewandelter Form aus zwei hülsenförmigen Folien gebildet sein, die wiederum aneinander befestigt sind. Auch können die hülsenförmigen Folien einzeln nacheinander oder gleichzeitig auf Andrehmotor 1 beziehungsweise elektromagnetischen Schalter 5 aufgezogen oder -geschoben werden, bevor sie geschrumpft werden.

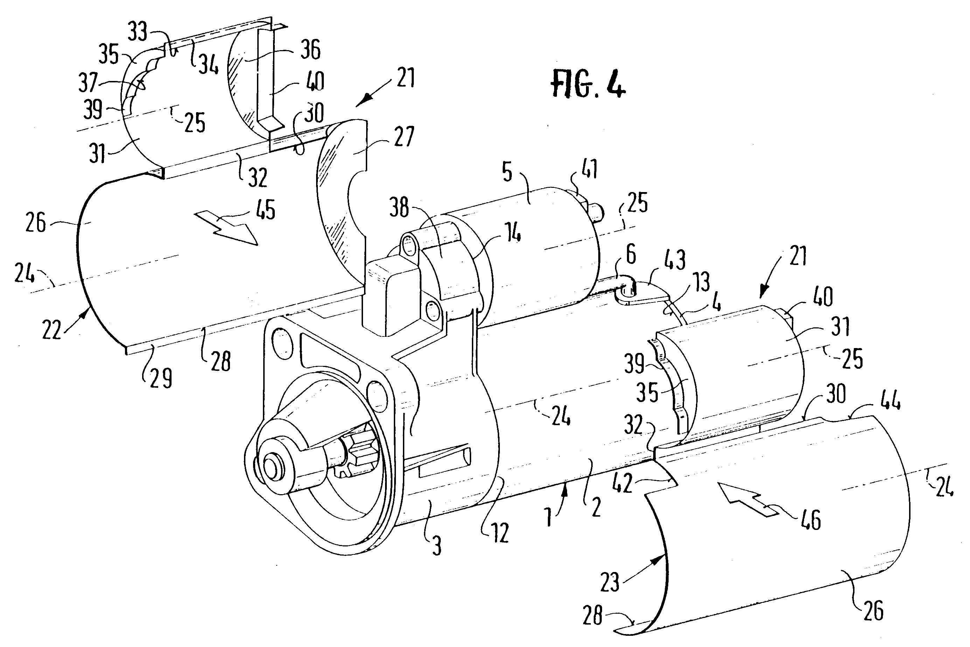

Ein viertes Ausführungsbeispiel ist in Figur 4 dargestellt. Die Andrehvorrichtung ist wiederum gleich der des ersten Ausführungsbeispieles nach Figur 1 und somit mit den selben Bezugszahlen versehen.

Eine Folie 21 zum Umhüllen der Andrehvorrichtung besteht aus zwei vorgeformten Hälften 22 und 23, die spiegelbildlich gleich sind. Die Trennlinie verläuft dabei in der Ebene, in welcher die Längsachse 24 des Andrehmotors 1 und die Längsachse 25 des elektromagnetischen Schalters 5 liegen. Jede Hälfe 22, 23 ist aus einem ersten halbzylinderförmigen Abschnitt 26 gebildet, an dessen einer Stirnseite eine halbringscheibenförmige Innenschulter 27 angeformt ist. Der Abschnitt 26 ist dem Umfang des Andrehmotors 1 angepaßt und hat eine Länge, die sich über die Stirnseiten des Polgehäuses 2 des Andrehmotors 1 hinaus erstreckt. Am unteren Längsrand 28 mindestens einer Hälfte 22 oder 23 ist ein Kleberand 29 ausgebildet. Am oberen Langsrand 30 jeder Hälfte 22 und 23 ist ein zweiter halbzylinderförmiger Abschnitt 31 angeformt über einen streifenförmigen Steg 32. Der zweite Abschnitt 31 ist dem Durchmesser und der Länge des elektromagnetischen Schalters 5 angepaßt. Mindestens der eine Längsrand 33 des zweiten Abschnitts 31 der Hälfte 22 oder 23 ist ebenfalls mit einem Klebestreifen 34 versehen oder als Klebestreifen ausgebildet. Der zweite Abschnitt 31 ist an seinen Stirnseiten mit Innenschultern 35 beziehungsweise 36 versehen. Der innere Rand 37 der Innenschulter 35 ist der Außenform des Antriebslagers 3 in dem Bereich 38 angepaßt, an dem der elektromagnetische Schalter 5 befestigt ist und mit einem rechtwinklig an der Stirnseite nach außen vorstehenden Flansch 39 versehen. Die Innenringschulter 36 ist mit einem sich ebenfalls senkrecht nach außen erstreckenden Randabschnitt 40 versehen, welcher der Außenform von Vorsprüngen 41 an der Stirnseite des Schalters 5 angepaßt ist, zu welcher das Stromzuführkabel 6 geführt ist. Am oberen Längsrand 30 des ersten Abschnitts 26 ist an dem die Trennungsfuge 12 zwischen Polgehäuse 2 und Antriebslager 3 überragenden Endabschnitt eine Ausnehmung 42 ausgebildet entsprechend der Außenform des Antriebslagers 3 an dieser Stelle. Außerdem ist von der anderen Stirnseite des ersten Abschnitts 26 eine einer Durchführung 43 des Stromzuführkabels 6 angepaßte Ausnehmung 44 am oberen Längsrand 30 ausgebildet.

Die beiden Hälften 22 und 23 werden in Pfeilrichtung 45, 46 seitlich um die Andrehvorrichtung gelegt. Die Kleberänder 29, 34 werden mit den Rändern der gegenüberliegenden Hälfte verklebt oder an die Randabschnitte bei 30 und 33 geklebt. Die so die Andrehvorrichtung umhüllende Folie 21 wird dann auf die Andrehvorrichtung geschrumpft.

Anstelle der Ausnehmung 44 kann der obere Längsrand 30 des einen ersten Abschnitts 26 weggelassen werden, während anstelle der Ausnehmung 44 des anderen ersten Abschnitts 26 eine Lasche mit einem Kleberand ausgebildet ist, welche bei den zusammengefügten Hälften 22 und 23 den oberen Längsrand 30 ohne die Ausnehmung 44 überlappt und mit ihm verklebt und dabei auch das Stromzuführkabel 6 und dessen Austrittsstelle aus dem Polgehäuse 2 sicher abdeckt.

Als Abwandlung der Folie 21 des vierten Ausführungsbeispieles nach Figur 4 ist die Folie einteilig als vorgeprägte Abwicklung ausgebildet, um die Teile 2 bis 5 gehüllt, mit dem Kleberand 29 am gegenüberliegenden unteren Längsrand zusammengeklebt und auf die umhüllten Teile 2 bis 5 geschrumpft.

Auch bei dieser Ausführungsform wie bei allen vorstehend beschriebenen Ausführungsbeispielen kann die Folie an die umhüllten Teile 2 bis 5 vor dem Schrumpfen geklebt sein. Bei eventuellen Beschädigungen der Folie kann sie nicht von den umhüllten Teilen abgezogen werden, so daß sie weiterhin die umhüllten Teile gegen das Eindringen von Schmutz und Feuchtigkeit und gegen Korrosion schützt.

## Patentansprüche

1. Elektrische Maschine (1) mit einem Polgehäuse (1) und daran befestigten Teilen (3 bis 5), wobei das Polgehäuse und die daran befestigten Teile zumindest während des Betriebes von einer Schutzumhüllung (7; 15; 16; 21) dauerhaft eingefaßt sind, dadurch gekennzeichnet, daß mindestens eine um das Polgehäuse (2) und um die am Polgehäuse (2) befestigten Teile (3 bis 5) gelegte Folie (7; 15; 16; 21) als Schutzumhüllung auf die umhüllten Teile (2 bis 5) geschrumpft ist.

2. Elektrische Maschine nach Anspruch 1, dadurch gekennzeichnet, daß die mindestens eine Folie (7; 16) als Tasche ausgebildet auf das Polgehäuse (2) und auf die daran befestigten Teile (3 bis 5) geschoben und auf sie fest aufgeschrumpft ist.

3. Elektrische Maschine nach Anspruch 1, dadurch gekennzeichnet, daß die mindestens eine Folie (15) als Abschnitt eines hülsenförmigen Schrumpfschlauchs auf das Polgehäuse (2) mit den daran befestigten Teilen (3 bis 5) gezogen und fest aufgeschrumpft ist.

4. Elektrische Maschine nach Anspruch 1, dadurch gekennzeichnet, daß die Folie (21) als vorgepräge Abwicklung entsprechend den Umrissen der zu umgebenden Teile (2 bis 5) ausgebildet und um diese Teile (2 bis 5) gehüllt ist, ihre überlappenden Ränder (28, 29) aneinander befestigt sind und die Abwicklung auf die umhüllten Teile (2 bis 5) geschrumpft ist.

5. Elektrische Maschine nach Anspruch 1, dadurch gekennzeichnet, daß die Folie (21) als vorgeprägte Hälften (22, 23) entsprechend den Umrissen der zu umhüllenden Teile (2 bis 5) ausgebildet ist, die um diese Teile (2 bis 5) gelegt, aneinander befestigt und auf die umhüllten Teile (2 bis 5) geschrumpft sind.

6. Elektrische Maschine nach Anspruch 1, dadurch gekennzeichnet, daß die mindestens eine aufgeschrumpfte Folie (7; 15; 16; 21) an den von ihr umhüllten Teilen (2 bis 5) festgeklebt ist.

7. Elektrische Maschine nach einem der Ansprüche 1 bis 6, dadurch gekennzeichnet, daß sie als Andrehmotor (1) und die an dessen Polgehäuse (2) befestigten Teile als Antriebs- und Kommutatorlager (3 und 4) sowie als elektromagnetischer Schalter (5) ausgebildet sind, auf die einschließlich einem zwischen Andrehmotor (1) und Schalter (5) geführten Stromzuführkabel (6) die mindestens eine Folie (7; 15; 16; 21) aufgeschrumpft ist.

8. Elektrische Maschine nach Anspruch 7, dadurch gekennzeichnet, daß eine erste taschenförmige Folie (17) auf den Andrehmotor (1) samt Antriebs- und Kommutatorlager (3 und 4) und eine zweite taschenförmige Folie (18) auf den Schalter (5) gezogen und fest aufgeschrumpft sind.

9. Elektrische Maschine nach Anspruch 7, dadurch gekennzeichnet, daß die Folie (16) aus einem Abschnitt eines ersten hülsenförmigen Schrumpfschlauchs, der auf den Andrehmotor (1) samt Antriebs- und Kommutatorlager (3 und 4) gezogen ist, und aus einem Abschnitt eines zweiten hülsenförmigen Schrumpfschlauchs besteht, der auf den Schalter (5) gezogen ist und beide Abschnitte fest aufgeschrumpft sind.

10. Elektrische Maschine nach Anspruch 8 oder 9, dadurch gekennzeichnet, daß die taschenförmigen Teile (17; 18) der Folie (16) beziehungsweise die beiden Abschnitte der hülsenförmigen Schrumpfschläuche vor dem Aufziehen als jeweilige vorgefertigte Baueinheit ausgebildet sind.

## Claims

1. Electrical machine (1) having a pole housing (2) and parts (3 to 5) attached thereto, the pole housing and the parts attached thereto being permanently enclosed, at least during use, by a protective covering (7; 15; 16; 21), characterised in that at least one film (7; 15; 16; 21), which is placed around the pole housing (2) and around the parts (3 to 5) attached to the pole housing (2), is shrunk onto the covered parts (2 to 5) as a protective covering.

2. Electrical machine according to Claim 1, characterised in that the at least one film (7; 16) is constructed as a pocket, is pushed onto the pole housing (2) and onto the parts (3 to 5) attached thereto, and is firmly shrunk thereon.

3. Electrical machine according to Claim 1, characterised in that the at least one film (15) as a section of a tubular shrink sleeve is drawn onto the pole housing (2), with the parts (3 to 5) attached thereto, and is firmly shrunk on.

4. Electrical machine according to Claim 1, characterised in that the film (21) is constructed as a prestamped envelope, corresponding to the outlines of the parts (2 to 5) to be surrounded, and covers said parts (2 to 5), its overlapping edges (28, 29) being attached to one another and the envelope being shrunk onto the covered parts (2 to 5).

5. Electrical machine according to Claim 1, characterised in that the film (21) is constructed as prestamped halves (22, 23), corresponding to the outlines of the parts (2 to 5) to be covered, which are placed around said parts (2 to 5), are attached to one another and are shrunk onto the covered parts (2 to 5).

6. Electrical machine according to Claim 1, characterised in that the at least one shrunk-on film (7; 15; 16; 21) is firmly bonded to the parts (2 to 5) which it covers.

7. Electrical machine according to one of Claims 1 to 6, characterised in that said machine is constructed as a starter motor (1) and the parts attached to its pole housing (2) are constructed as drive and commutator bearings (3 and 4) and as the electromagnetic switch (5), onto which, including a power supply cable (6) passing between the starter motor (1) and the switch (5), the at least one film (7; 15; 16; 21) is shrunk.

8. Electrical machine according to Claim 7, characterised in that a first pocket-shaped film (17) is drawn and firmly shrunk onto the starter motor (1) together with the drive and commutator bearings (3 and 4), and a second pocket-shaped film (18) is drawn and firmly shrunk onto the switch (5).

9. Electrical machine according to Claim 7, characterised in that the film (16) consists of a section of a first tubular shrink sleeve, which is drawn onto the starter motor (1) together with the drive and commutator bearings (3 and 4), and of a section of a second tubular shrink sleeve, which is drawn onto the switch (5), and both sections are firmly shrunk on.

10. Electrical machine according to Claim 8 or 9, characterised in that the pocket-shaped parts (17; 18) of the film (16) and the two sections of the tubular shrink sleeves are each constructed as a prefabricated unit before being drawn on.

## Revendications

1. Moteur électrique (1) avec un stator (1) et des pièces (3 à 5) fixées sur celui-ci, dans lequel le stator et les pièces fixées sur celui-ci sont enfermées, au moins pendant le fonctionnement, par une enveloppe de protection contre les saletés (7; 15; 16; 21), moteur électrique caractérisé en ce qu'au moins une feuille (7; 15; 16; 21) mise autour du stator (2) et autour des pièces (3 à 5) fixées sur le stator (2), est thermorétrécie en tant qu'enveloppe de protection sur les pièces enveloppées (2 à 5).

2. Moteur électrique selon la revendication 1, caractérisé en ce que l'une au moins des feuilles (7; 16) constituée comme une poche, est enfilée sur le stator (2) et sur les pièces (3 à 5) fixées sur celui-ci, puis thermorétrécie sur eux de façon à en devenir solidaire.

3. Moteur électrique selon la revendication 1, caractérisée en ce que l'une au moins des feuilles (15) est tirée, comme une section d'un tuyau thermo-rétractable en forme d'enveloppe, sur le stator (2) ainsi que sur les pièces (3 à 5) fixées sur celui-ci, puis thermorétrécie pour en devenir solidaire.

4. Moteur électrique selon la revendication 1, caractérisé en ce que la feuille (21) est constituée sous la forme d'une feuille développée préalablement frappée correspondant aux saillies des pièces à entourer (2 à 5), puis enveloppée autour de ces pièces (2 à 5), en ce que ses bords qui se recouvrent (28, 29) sont fixés les uns aux autres, et en ce que la feuille développée est thermorétrécie sur les pièces enveloppées 2 à 5).

5. Moteur électrique selon la revendication 1, caractérisé en ce que la feuille (21) est constituée de deux moitiés (22, 23) préalablement frappées, correspondant aux saillies des pièces à envelopper (2 à 5),qui sont mises autour de ces pièces (2 à 5), puis fixées l'une à l'autre et thermorétrécies sur les pièces enveloppées (2 à 5).

6. Moteur électrique selon la revendication 1, caractérisé en ce que l'une au moins des feuilles thermorétrécies (7; 15; 16; 21) est collée solidairement sur les pièces qu'elle enveloppe (2 à 5).

7. Moteur électrique selon l'une des revendications 1 à 6, caractérisé en ce qu'il est constitué sous la forme d'un moteur de démarrage (1) et les pièces fixées sur son stator (2) sont constituées sous la forme d'un palier d'entraînement et d'un palier de collecteur (3 et 4) ainsi que d'un commutateur électromagnétique (5), sur lesquels, y compris un câble d'amenée du courant passé entre le moteur de démarrage (1) et le commutateur (5), l'une au moins des feuilles (7; 15; 16; 21) est thermo-rétractée.

8. Moteur électrique selon la revendication 7, caractérisé en ce qu'une première feuille en forme de poche (17) est tirée et thermorétractée sur le moteur de démarrage (1) y compris les paliers d'entraînement et de collecteur (3 et 4) et une deuxième feuille en forme de poche (18) est tirée et thermorétractée sur le commutateur (5) de façon à se solidariser avec eux.

9. Machine électrique selon la revendication 7, caractérisée en ce que la feuille (16) consiste en une section d'un premier tuyau thermorétractable en forme d'enveloppe, qui est tirée sur le moteur de démarrage (1) y compris les paliers d'entraînement et de collecteur (3 et 4) et en une section d'un second tuyau thermorétractable en forme d'enveloppe, qui est tirée sur le commutateur (5) et en ce que les deux sections sont thermorétractées de façon à se solidariser avec les pièces.

10. Moteur électrique selon la revendication 8 ou 9, caractérisé en ce que les parties en forme de poche (17; 18) de la feuille (16) ou les deux sections des tuyaux thermorétractables en forme d'enveloppe sont constituées comme des unités respectivement préfabriquées avant d'être tirées.
